# EUROPEAN PATENT APPLICATION

(11) **EP 4 006 209 A1**
(43) Date of publication of application: **01.06.2022**
(21) Application number: 20842673.4
(22) Date of filing: 08.07.2020
(51) Int. Cl.: C25B 15/08

(54) **HYDROGEN PURIFICATION SYSTEM**

(30) Priority: 25.07.2019 JP 2019136932
(71) Applicant: Panasonic Intellectual Property Management Co., Ltd., Osaka-shi, Osaka 540-6207 (JP)
(72) Inventor: MATSUMOTO, Taku, Osaka-shi, Osaka 540-6207 (JP); TAMURA, Yoshio, Osaka-shi, Osaka 540-6207 (JP); AKATSUKA, Takuya, Osaka-shi, Osaka 540-6207 (JP)
(74) Representative: Grünecker Patent- und Rechtsanwälte PartG mbB
(86) International application number: PCT/JP2020/026633
(87) International publication number: WO 2021/014969

(57) **Abstract**

A hydrogen purification system (100) includes a plurality of electrochemical devices (5a, 5b); a hydrogen production device (1); power supplies (6a, 6b), and a combustor (7). Purified hydrogen gas contained in the purified hydrogen gas supplied to an anode of a non-most upstream electrochemical device and discharged from the anode without permeating an electrolyte membrane from the anode to a cathode is mixed with gas to be supplied to the anode.

## Description

### TECHNICAL FIELD

The present disclosure relates to a hydrogen purification system which includes a hydrogen production device that produces hydrogen-containing gas from raw material gas and a plurality of electrochemical devices that purify the hydrogen-containing gas to produce purified hydrogen gas with high purity. The hydrogen purification system produces highly purified hydrogen gas that is high purity hydrogen by causing the electrochemical devices to produce purified hydrogen gas.

### BACKGROUND ART

A conventional hydrogen purification system produces highly purified hydrogen gas with high hydrogen purity by using two electrochemical devices each of which includes an electrolyte membrane sandwiched between an anode and a cathode and connecting the cathode of the upstream electrochemical device and the anode of the downstream electrochemical device. Upon a supply of hydrogen-containing gas to the anodes of the electrochemical devices, and an application of current between the anodes and the cathodes, the electrochemical devices electrochemically separate hydrogen from the hydrogen-containing gas containing impurities for purification (see, for example, Non-Patent Literature (NPTL) 1).

In a hydrogen production power generation system, hydrogen-containing gas is supplied, to the anode of an electrochemical device, from a hydrogen production device which reforms raw material gas to produce hydrogen-containing gas. The anode off-gas discharged from the anode is supplied to a combustor that controls the temperature of the reforming reaction in the hydrogen production device, and the anode off-gas is used for the combustion of the reforming reaction (see, for example, Patent Literature (PTL) 1).

A conventional hydrogen purification system generally uses a plurality of electrochemical devices to produce highly purified hydrogen gas with high purity, and supplies the anode off-gas of each electrochemical device to a combustor.

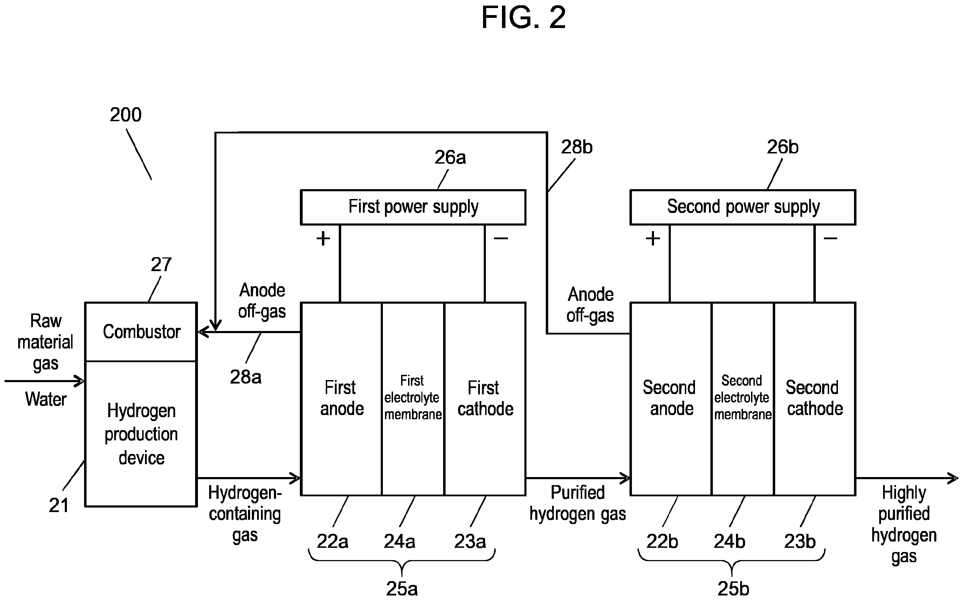

FIG. 2 is a block diagram illustrating a configuration of a conventional hydrogen purification system. As illustrated in FIG. 2, conventional hydrogen purification system 200 includes hydrogen production device 21, first electrochemical device 25a, second electrochemical device 25b, first power supply 26a, second power supply 26b, combustor 27, first circulation path 28a, and second circulation path 28b.

First electrochemical device 25a includes first anode 22a, first cathode 23a, and first electrolyte membrane 24a. Second electrochemical device 25b includes second anode 22b, second cathode 23b, and second electrolyte membrane 24b.

The hydrogen-containing gas produced by hydrogen production device 21 is supplied to first anode 22a. The purified hydrogen gas discharged from first cathode 23a is supplied to second anode 22b. First power supply 26a applies current between first anode 22a and first cathode 23a. Second power supply 26b applies current between second anode 22b and second cathode 23b.

Combustor 27 combusts the anode off-gas to heat hydrogen production device 21. First circulation path 28a supplies, to combustor 27, the anode off-gas discharged from first anode 22a. Second circulation path 28b supplies, to combustor 27, the anode off-gas discharged from second anode 22b.

In first electrochemical device 25a, for example, an electrolyte membrane-electrode assembly (MEA), in which first electrolyte membrane 24a that selectively transports protons is sandwiched between first anode 22a and first cathode 23a, is sandwiched between a pair of separators.

In second electrochemical device 25b, for example, an electrolyte MEA, in which second electrolyte membrane 24b that selectively transports protons is sandwiched between second anode 22b and second cathode 23b, is sandwiched between a pair of separators.

Upon a supply of the hydrogen-containing gas to first anode 22a, and an application of current between first anode 22a and first cathode 23a, an oxidation reaction of (Chem. 1) occurs in first anode 22a, and a reduction reaction of (Chem. 2) occurs in first cathode 23a.

[Chem. 1] H₂ → 2H⁺ + 2e⁻

[Chem. 2] 2H⁺ + 2e⁻ → H₂

By the above reactions, hydrogen can be separated from the hydrogen-containing gas supplied to first anode 22a. Accordingly, purified hydrogen gas can be produced.

Moreover, in order to increase the hydrogen purity of the purified hydrogen gas produced by first electrochemical device 25a, the purified hydrogen gas discharged from first cathode 23a is supplied to second anode 22b, and current is applied between second anode 22b and second cathode 23b. This causes an oxidation reaction of (Chem. 1) in second anode 22b, and causes a reduction reaction of (Chem. 2) in second cathode 23b.

By the above reactions, hydrogen can be separated from the purified hydrogen gas supplied to second anode 22b. Accordingly, highly purified hydrogen gas having a higher hydrogen purity than the purified hydrogen gas can be produced.

The hydrogen-containing gas contained in the hydrogen-containing gas supplied to first anode 22a and discharged from first anode 22a without permeating first electrolyte membrane 24a from first anode 22a to first cathode 23a is defined as anode off-gas. The anode off-gas is supplied to combustor 27 via first circulation path 28a and is combusted by combustor 27, so that hydrogen production device 21 is heated.

Moreover, the hydrogen-containing gas contained in the purified hydrogen gas supplied to second anode 22b and discharged from second anode 22b without permeating second electrolyte membrane 24b from second anode 22b to second cathode 23b is supplied to combustor 27 via second circulation path 28b, and is combusted by combustor 27, so that hydrogen production device 21 is heated.

The proportion of the flow rate of the purified hydrogen gas discharged from first cathode 23a in the flow rate of the hydrogen-containing gas supplied to first anode 22a, and the proportion of the flow rate of the purified hydrogen gas discharged from second cathode 23a in the flow rate of the purified hydrogen gas supplied to second anode 22b are defined as a hydrogen utilization rate. First electrochemical device 25a and second electrochemical device 25b operate at a predetermined hydrogen utilization rate. When the hydrogen utilization rate of the electrochemical devices is 100%, the anode off-gas supplied to combustor 27 is 0. In such a case, excessive temperature rise of hydrogen production device 21 does not occur, but the deterioration of the electrochemical devices is accelerated. Accordingly, the hydrogen utilization rate of the electrochemical devices is generally set to a value that is less than 100%.

### Citation List

### Patent Literature

PTL 1: Japanese Unexamined Patent Application Publication No. 2009-17120

### Non-Patent Literature

NPTL 1: H. K. Lee, H. Y. Choi, K. H. Choi, J. H. Park, T. H. Lee, Journal of Power Sources 132 (2004) 92-98.

### SUMMARY (SUMMARY OF THE INVENTION)

However, in the conventional configuration, the anode off-gas of all electrochemical devices is supplied to the combustor. Accordingly, when the hydrogen utilization rate of the electrochemical devices is kept at a predetermined value, the amount of anode off-gas supplied to the combustor increases as the number of electrochemical devices connected in series increases. Hence, there is a problem in that the hydrogen production device deteriorates due to excessive temperature rise, and a problem in that the efficiency is reduced by combustion of the anode off-gas having a relatively high hydrogen purity of the non-most upstream electrochemical device.

The present disclosure has been conceived to solve the conventional problems. An object of the present disclosure is to provide a hydrogen purification system in which the amount of anode off-gas supplied to the combustor does not increase even when the number of electrochemical devices connected in series increases.

In order to solve the conventional problems, in a hydrogen purification system according to the present disclosure, the anode off-gas of the most upstream electrochemical device of the plurality of electrochemical devices connected in series is supplied to the combustor which heats the hydrogen production device. The anode off-gas of the non-most upstream electrochemical device is mixed with the gas to be supplied to the anode of the non-most upstream electrochemical device or the anode of the electrochemical device upstream of the non-most upstream electrochemical device.

Accordingly, even when the number of electrochemical devices connected in series increases and the hydrogen utilization rate of the electrochemical devices is kept at a predetermined value, the amount of anode off-gas supplied to the combustor does not increase.

The hydrogen purification system according to the present disclosure is capable of preventing the amount of anode off-gas supplied to the combustor from increasing even when the number of electrochemical devices connected in series increases and the hydrogen utilization rate of the electrochemical devices is kept at a predetermined value.

### BRIEF DESCRIPTION OF THE DRAWINGS

[FIG. 1]

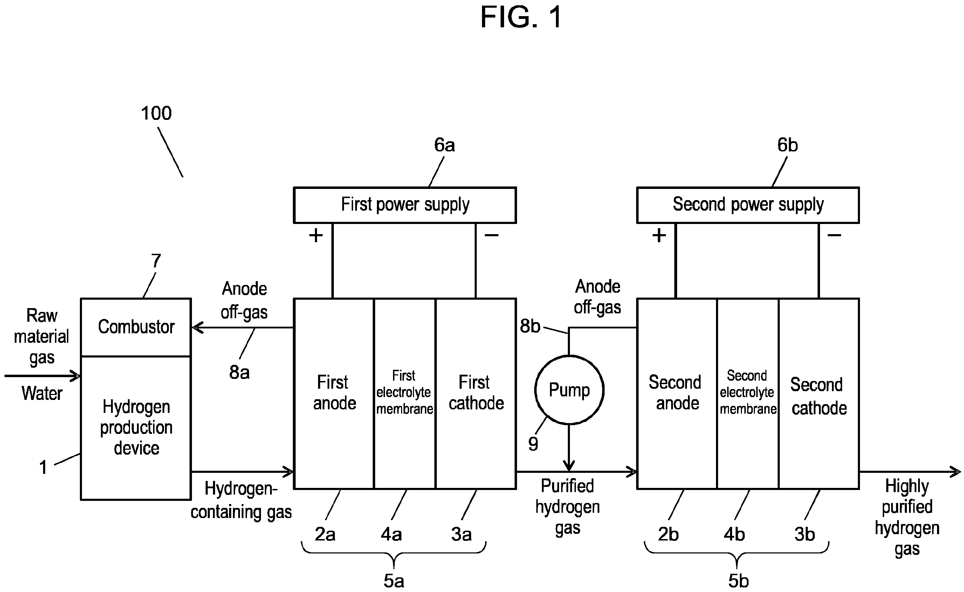

   FIG. 1 is a block diagram illustrating a configuration of a hydrogen purification system according to a first embodiment of the present disclosure.
[FIG. 2]
   FIG. 2 is a block diagram illustrating a configuration of a conventional hydrogen purification system.

### DESCRIPTION OF EMBODIMENT

A hydrogen purification system according to the present disclosure includes: a plurality of electrochemical devices each of which includes an electrolyte membrane-electrode assembly (MEA) including an electrolyte membrane, an anode disposed on a first surface of the electrolyte membrane, and a cathode disposed on a second surface of the electrolyte membrane, the cathode discharging purified hydrogen gas upon a supply of hydrogen-containing gas to the anode and an application of current between the anode and the cathode in a predetermined direction, the purified hydrogen gas having a hydrogen purity higher than a hydrogen purity of the hydrogen-containing gas supplied to the anode; a hydrogen production device which supplies the hydrogen-containing gas produced from raw material gas; a power supply which applies the current between the anode and the cathode of each of the plurality of electrochemical devices; and a combustor which heats the hydrogen production device. The plurality of electrochemical devices are connected in series such that the hydrogen production device supplies the hydrogen-containing gas to the anode of a most upstream electrochemical device of the plurality of electrochemical devices, purified hydrogen gas discharged from the cathode of the most upstream electrochemical device is supplied to the anode of one of the plurality of electrochemical devices that is adjacent to the most upstream electrochemical device, and among adjacent ones of the plurality of electrochemical devices, purified hydrogen gas discharged from the cathode of an upstream electrochemical device is supplied to the anode of a downstream electrochemical device. The combustor combusts hydrogen-containing gas contained in the hydrogen-containing gas supplied to the anode of the most upstream electrochemical device and discharged from the anode of the most upstream electrochemical device without permeating the electrolyte membrane from the anode to the cathode of the most upstream electrochemical device. The purified hydrogen gas contained in the purified hydrogen gas supplied to the anode of a non-most upstream electrochemical device and discharged from the anode of the non-most upstream electrochemical device without permeating the electrolyte membrane from the anode to the cathode of the non-most upstream electrochemical device is mixed with the gas to be supplied to the anode of the non-most upstream electrochemical device.

A hydrogen purification system according to the present disclosure includes: a first electrochemical device which includes a first electrolyte membrane-electrode assembly (MEA) including a first electrolyte membrane, a first anode disposed on a first surface of the first electrolyte membrane, and a first cathode disposed on a second surface of the first electrolyte membrane, the first cathode discharging purified hydrogen gas upon a supply of hydrogen-containing gas to the first anode and an application of current between the first anode and the first cathode in a predetermined direction, the purified hydrogen gas having a hydrogen purity higher than the hydrogen-containing gas; a second electrochemical device which is connected in series with the first electrochemical device and includes a second MEA including a second electrolyte membrane, a second anode disposed on a first surface of the second electrolyte membrane, and a second cathode disposed on a second surface of the second electrolyte membrane, the second cathode discharging highly purified hydrogen gas upon a supply of the purified hydrogen gas to the second anode and an application of current between the second anode and the second cathode in a predetermined direction, the highly purified hydrogen gas having a hydrogen purity higher than the purified hydrogen gas; a hydrogen production device which supplies the hydrogen-containing gas produced from raw material gas to the first anode; a power supply which applies current between the first anode and the first cathode and between the second anode and the second cathode; a combustor which heats the hydrogen production device by combusting the hydrogen-containing gas contained in the hydrogen-containing gas supplied to the first anode and discharged from the first anode without permeating the first electrolyte membrane from the first anode to the first cathode; and a circulation path for mixing, with the purified hydrogen gas to be supplied to the second anode, the purified hydrogen gas contained in the purified hydrogen gas supplied to the second anode and discharged from the second anode without permeating the second electrolyte membrane from the second anode to the second cathode.

Accordingly, it is possible to prevent the amount of anode off-gas supplied to the combustor from increasing. Hence, even when the number of electrochemical devices connected in series increases and the hydrogen utilization rate of the electrochemical devices is kept at a predetermined value, excessive temperature rise of the hydrogen production device does not occur. As a result, it is possible to achieve a hydrogen purification system which does not deteriorate.

Hereinafter, an embodiment will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (First Embodiment)

FIG. 1 is a block diagram illustrating a configuration of a hydrogen purification system according to a first embodiment of the present disclosure.

As illustrated in FIG. 1, hydrogen purification system 100 according to the present embodiment includes hydrogen production device 1, first electrochemical device 5a, second electrochemical device 5b, first power supply 6a, second power supply 6b, combustor 7 which combusts anode off-gas to heat hydrogen production device 1, first circulation path 8a, second circulation path 8b, and pump 9.

Hydrogen production device 1 uses raw material gas and water to produce hydrogen-containing gas by reforming reaction. Hydrogen production device 1 includes a reforming catalyst (not illustrated) and combustor 7. Water is heated inside hydrogen production device 1 and becomes steam, which reacts with the raw material gas in the reforming catalyst to produce hydrogen-containing gas. As the raw material gas, city gas is used which contains methane as a main component.

First electrochemical device 5a includes an electrolyte membrane-electrode assembly (MEA) sandwiched between a pair of separators. The MEA includes first anode 2a, first cathode 3a, and first electrolyte membrane 4a which is sandwiched between first anode 2a and first cathode 3a. The hydrogen-containing gas produced by hydrogen production device 1 is supplied to first anode 2a of first electrochemical device 5a. Upon an application of current between first anode 2a and first cathode 3a in a predetermined direction, hydrogen in the hydrogen-containing gas supplied to first anode 2a is selectively and electrically transported to first cathode 3a through first electrolyte membrane 4a. As a result, purified hydrogen gas having a higher hydrogen purity than the hydrogen-containing gas supplied to first anode 2a is discharged from first cathode 3a.

Second electrochemical device 5b includes an electrolyte MEA sandwiched between a pair of separators. The MEA includes second anode 2b, second cathode 3b, and second electrolyte membrane 4b which is sandwiched between second anode 2b and second cathode 3b. The purified hydrogen gas discharged from first cathode 3a of first electrochemical device 5a is supplied to second anode 2b. Upon an application of current between second anode 2b and second cathode 3b in a predetermined direction, hydrogen in the hydrogen-containing gas supplied to second anode 2b is selectively and electrically transported to second cathode 3b through second electrolyte membrane 4b. As a result, highly purified hydrogen gas having a higher hydrogen purity than the purified hydrogen gas supplied to second anode 2b is discharged from second cathode 3b.

First power supply 6a is a direct current (DC) power supply which includes a positive terminal electrically connected to first anode 2a and a negative terminal electrically connected to first cathode 3a. First power supply 6a applies current in the direction from first anode 2a to first cathode 3a of first electrochemical device 5a through first electrolyte membrane 4a.

Second power supply 6b is a DC power supply which includes a positive terminal electrically connected to second anode 2b and a negative terminal electrically connected to second cathode 3b. Second power supply 6b applies current in the direction from second anode 2b to second cathode 3b of second electrochemical device 5b through second electrolyte membrane 4b.

First circulation path 8a is a path for supplying, to combustor 7, anode off-gas, that is, the hydrogen-containing gas contained in the hydrogen-containing gas supplied from hydrogen production device 1 to first anode 2a and discharged from first anode 2a without permeating first electrolyte membrane 4a from first anode 2a to first cathode 3a.

Second circulation path 8b is a path for mixing, with the purified hydrogen gas to be supplied from first cathode 3a to second anode 2b, the purified hydrogen gas contained in the purified hydrogen gas supplied from first cathode 3a to second anode 2b and discharged from second anode 2b without permeating second electrolyte membrane 4b from second anode 2b to second cathode 3b.

Pump 9 is provided in second circulation path 8b. Pump 9 mixes, with the purified hydrogen gas to be supplied from first cathode 3a to second anode 2b, the purified hydrogen gas contained in the purified hydrogen gas supplied to second anode 2b and discharged from second anode 2b without permeating second electrolyte membrane 4b from second anode 2b to second cathode 3b.

Hydrogen production device 1 is connected to first anode 2a of first electrochemical device 5a such that the hydrogen-containing gas produced by hydrogen production device 1 is supplied to first anode 2a of first electrochemical device 5a.

Second electrochemical device 5b is connected to first cathode 3a of first electrochemical device 5a such that the purified hydrogen gas discharged from first cathode 3a is supplied to second anode 2b.

The operation and effects of hydrogen purification system 100 according to the present embodiment configured as described above will be described below.

The flow rate of highly purified hydrogen gas produced by hydrogen purification system 100 is 10 L/min. In order that hydrogen in the hydrogen-containing gas supplied to first anode 2a is selectively and electrically transported to first cathode 3a through first electrolyte membrane 4a, the value of current flowing through first power supply 6a is set to 9.5 A. Purified hydrogen gas is discharged from first cathode 3a at a flow rate of 10 L/min. In order that the hydrogen in the purified hydrogen gas supplied to second anode 2b is electively and electrically transported to second cathode 3b through second electrolyte membrane 4b, the value of current flowing through second power supply 6b is set to 9.5 A. Highly purified hydrogen gas is discharged from second cathode 3b at a flow rate of 10 L/min. The hydrogen utilization rate of first electrochemical device 5a and second electrochemical device 5b is set to 83.3 %. The hydrogen-containing gas is supplied to combustor 7 at a flow rate of 2 L/min.

First, hydrogen production device 1 produces hydrogen-containing gas such that the flow rate of the hydrogen-containing gas to be supplied to first anode 2a is 12 L/min. When current of 9.5 A flows through first power supply 6a, purified hydrogen gas is discharged from first cathode 3a at a flow rate of 10 L/min. The hydrogen-containing gas, contained in the hydrogen-containing gas supplied to first anode 2a and discharged from first anode 2a without permeating first electrolyte membrane 4a from first anode 2a to first cathode 3a, is supplied to combustor 7 via first circulation path 8a at a flow rate of 2 L/min.

Next, when current of 9.5 A flows through second power supply 6b, highly purified hydrogen gas is discharged from second cathode 3b at a flow rate of 10 L/min. The purified hydrogen gas, contained in the purified hydrogen gas supplied to second anode 2b and discharged from second anode 2b without permeating second electrolyte membrane 4b from second anode 2b to second cathode 3b, that is, the purified hydrogen gas passing through circulation path 8b is mixed by pump 9 with the purified hydrogen gas to be supplied from first cathode 3a to second anode 2b at a flow rate of 2 L/min.

The connection destination of first circulation path 8a and the connection destination of second circulation path 8b are different from each other. The hydrogen-containing gas discharged from first anode 2a is supplied to combustor 7, but the purified hydrogen gas discharged from second anode 2b is not supplied to combustor 7.

As described above, hydrogen purification system 100 according to the present embodiment includes first electrochemical device 5a and second electrochemical device 5b which are connected in series such that the purified hydrogen gas discharged from first cathode 3a is supplied to second anode 2b, hydrogen production device 1, first power supply 6a, second power supply 6b, combustor 7, second recirculation path 8b, and pump 9. Hydrogen production device 1 supplies hydrogen-containing gas produced from the raw material gas to first anode 2a. First power supply 6a applies current in the direction from first anode 2a to first cathode 3a through first electrolyte membrane 4a. Second power supply 6b applies current in the direction from second anode 2b to second cathode 3b of second electrochemical device 5b through second electrolyte membrane 4b. Combustor 7 is connected to first anode 2a via first circulation path 8a, and combusts the hydrogen-containing gas discharged from first anode 2a to heat hydrogen production device 1. Second circulation path 8b mixes the purified hydrogen gas discharged from second anode 2b with the purified hydrogen gas to be supplied from first cathode 3a to second anode 2b. Pump 9 is provided in second circulation path 8b to mix the purified hydrogen gas discharged from second anode 2b with the purified hydrogen gas to be supplied from first cathode 3a to second anode 2b.

As a result, deterioration of hydrogen production device 1 due to excessive temperature rise is reduced even when two electrochemical devices which are first electrochemical device 5a and second electrochemical device 5b are connected in series, and the hydrogen utilization rate of first electrochemical device 5a and second electrochemical device 5b is set to 83.3%. This is because the hydrogen-containing gas supplied to combustor 7 includes only the hydrogen-containing gas supplied from first anode 2a via first circulation path 8a, that is, the hydrogen-containing gas from one electrochemical device, and the purified hydrogen gas discharged from second anode 2b is supplied to second anode 2b. Accordingly, the anode off-gas of second electrochemical device 5b can be effectively used, leading to an efficient hydrogen purification system.

Moreover, in hydrogen purification system 100 according to the present embodiment, even when hydrogen is purified with an increased number of electrochemical devices connected in series downstream of second electrochemical device 5b and with the hydrogen utilization rate of the electrochemical devices set to a predetermined value, the flow rate of the hydrogen-containing gas supplied to combustor 7 does not increase. Accordingly, it is possible to achieve hydrogen purification system 100 in which excessive temperature rise of hydrogen production device 1 does not occur and deterioration is reduced.

In the present embodiment, the example has been described in which the anode off-gas of second electrochemical device 5b is mixed with the purified hydrogen gas to be supplied to second anode 2b. However, the present disclosure is not limited to such an example. For example, the anode off-gas of second electrochemical device 5b may be mixed with the hydrogen-containing gas to be supplied to first anode 2a. In such a case, the amount of anode off-gas supplied to combustor 7 does not increase. Moreover, when the number of electrochemical devices connected in series increases and a third electrochemical device (not illustrated) is connected downstream of second electrochemical device 5b, a circulation path may be provided for mixing the anode off-gas of the third electrochemical device with at least one of the purified hydrogen gas to be supplied to second anode 2b and the gas to be supplied to the third anode (not illustrated).

### INDUSTRIAL APPLICABILITY

As described above, in the hydrogen purification system according to the present disclosure, the amount of anode off-gas supplied to the combustor does not increase even when the number of electrochemical devices connected in series increases and the hydrogen utilization rate of the electrochemical devices is kept at a predetermined value. Accordingly, the hydrogen purification system can be used in an application where a plurality of electrochemical devices connected in series are used to produce highly purified hydrogen gas having high hydrogen purity from the hydrogen-containing gas produced by the hydrogen production device.

### REFERENCE MARKS IN THE DRAWINGS

- 1.21: hydrogen production device
- 2a, 22a: first anode
- 2b, 22b: second anode
- 3a, 23a: first cathode
- 3b, 23b: second cathode
- 4a, 24a: first electrolyte membrane
- 4b, 24b: second electrolyte membrane
- 5a, 25a: first electrochemical device
- 5b, 25b: second electrochemical device
- 6a, 26a: first power supply
- 6b, 26b: second power supply
- 7, 27: combustor
- 8a, 28a: first circulation path
- 8b, 28b: second circulation path
- 9: pump
- 100, 200: hydrogen purification system

## Claims

1. A hydrogen purification system, comprising:
a plurality of electrochemical devices each of which includes an electrolyte membrane-electrode assembly (MEA) including an electrolyte membrane, an anode disposed on a first surface of the electrolyte membrane, and a cathode disposed on a second surface of the electrolyte membrane, the cathode discharging purified hydrogen gas upon a supply of hydrogen-containing gas to the anode and an application of current between the anode and the cathode in a predetermined direction, the purified hydrogen gas having a hydrogen purity higher than a hydrogen purity of the hydrogen-containing gas supplied to the anode;
a hydrogen production device which supplies the hydrogen-containing gas produced from raw material gas;
a power supply which applies the current between the anode and the cathode of each of the plurality of electrochemical devices; and
a combustor which heats the hydrogen production device,
wherein the plurality of electrochemical devices are connected in series such that the hydrogen production device supplies the hydrogen-containing gas to the anode of a most upstream electrochemical device of the plurality of electrochemical devices, purified hydrogen gas discharged from the cathode of the most upstream electrochemical device is supplied to the anode of one of the plurality of electrochemical devices that is adjacent to the most upstream electrochemical device, and among adjacent ones of the plurality of electrochemical devices, purified hydrogen gas discharged from the cathode of an upstream electrochemical device is supplied to the anode of a downstream electrochemical device,
the combustor combusts hydrogen-containing gas contained in the hydrogen-containing gas supplied to the anode of the most upstream electrochemical device and discharged from the anode of the most upstream electrochemical device without permeating the electrolyte membrane from the anode to the cathode of the most upstream electrochemical device, and
purified hydrogen gas contained in the purified hydrogen gas supplied to the anode of a non-most upstream electrochemical device and discharged from the anode of the non-most upstream electrochemical device without permeating the electrolyte membrane from the anode to the cathode of the non-most upstream electrochemical device is mixed with gas to be supplied to the anode of the non-most upstream electrochemical device.

2. A hydrogen purification system, comprising:
a first electrochemical device which includes a first electrolyte membrane-electrode assembly (MEA) including a first electrolyte membrane, a first anode disposed on a first surface of the first electrolyte membrane, and a first cathode disposed on a second surface of the first electrolyte membrane, the first cathode discharging purified hydrogen gas upon a supply of hydrogen-containing gas to the first anode and an application of current between the first anode and the first cathode in a predetermined direction, the purified hydrogen gas having a hydrogen purity higher than the hydrogen-containing gas;
a second electrochemical device which is connected in series with the first electrochemical device and includes a second MEA including a second electrolyte membrane, a second anode disposed on a first surface of the second electrolyte membrane, and a second cathode disposed on a second surface of the second electrolyte membrane, the second cathode discharging highly purified hydrogen gas upon a supply of the purified hydrogen gas to the second anode and an application of current between the second anode and the second cathode in a predetermined direction, the highly purified hydrogen gas having a hydrogen purity higher than the purified hydrogen gas;
a hydrogen production device which supplies the hydrogen-containing gas produced from raw material gas to the first anode;
a power supply which applies current between the first anode and the first cathode and between the second anode and the second cathode;
a combustor which heats the hydrogen production device by combusting hydrogen-containing gas contained in the hydrogen-containing gas supplied to the first anode and discharged from the first anode without permeating the first electrolyte membrane from the first anode to the first cathode; and
a circulation path for mixing, with at least one of the hydrogen-containing gas to be supplied to the first anode and the purified hydrogen gas to be supplied to the second anode, purified hydrogen gas contained in the purified hydrogen gas supplied to the second anode and discharged from the second anode without permeating the second electrolyte membrane from the second anode to the second cathode.
